# EUROPEAN PATENT APPLICATION

(11) **EP 4 546 070 A1**
(43) Date of publication of application: **30.04.2025**
(21) Application number: 23206550.8
(22) Date of filing: 27.10.2023
(51) Int. Cl.: G05D 1/00

(54) **A METHOD AND SYSTEM FOR IMPROVING SAFETY OF A MANNED SERVICE VEHICLE**

(71) Applicant: AUTOSTORE TECHNOLOGY AS, 5578 Nedre Vats (NO)
(72) Inventor: Stromme, Erik, Nedre Vats 5578 (NO)
(74) Representative: Jarrett, Daniel Phillip

(57) **Abstract**

The present disclosure provides a method for improving safety of a manned service vehicle (10) on a rail system having remotely operated vehicles (201, 301, 401) operating thereon, said method comprising: establishing a dynamic restricted zone (30) around the service vehicle (10); moving the service vehicle (10) from a start location (20) towards a target location (25) along a service vehicle route (15); and if a remotely operated vehicle (201, 301, 401) on the rail system (108) has been assigned with a vehicle task with a remotely operated vehicle route (35) that includes moving towards the dynamic restricted zone (30), providing a new remotely operated vehicle route (40).

## Description

### FIELD OF THE INVENTION

The present invention relates to a method for improving safety of a manned service vehicle for an automatic grid-based storage and retrieval system and a system in which such a method may be implemented.

### BACKGROUND AND PRIOR ART

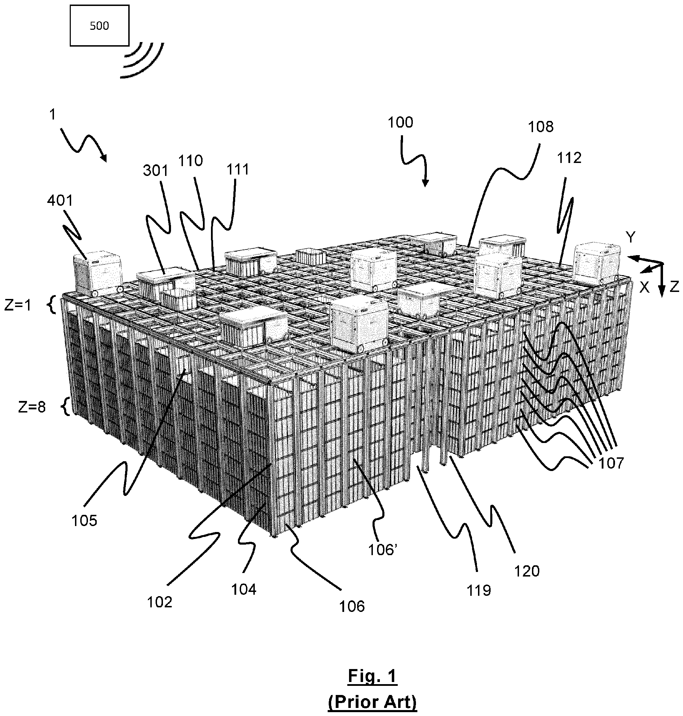

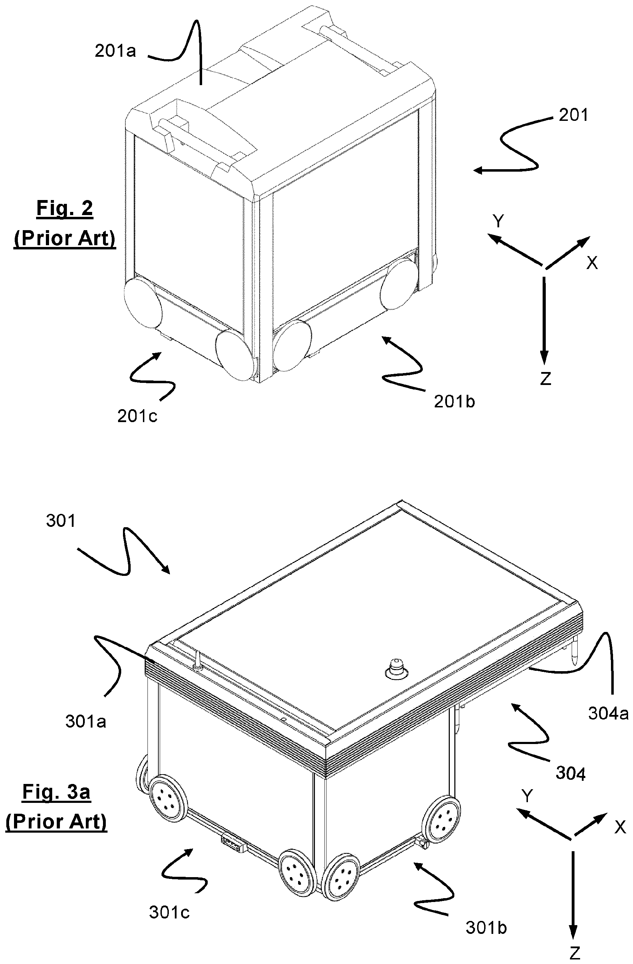

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, may be stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction X across the top of the frame structure 100, and a second set of parallel rails 111 arranged perpendicular to the first set of rails 110 to guide movement of the container handling vehicles 301, 401 in a second direction *Y* which is perpendicular to the first direction *X.* Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

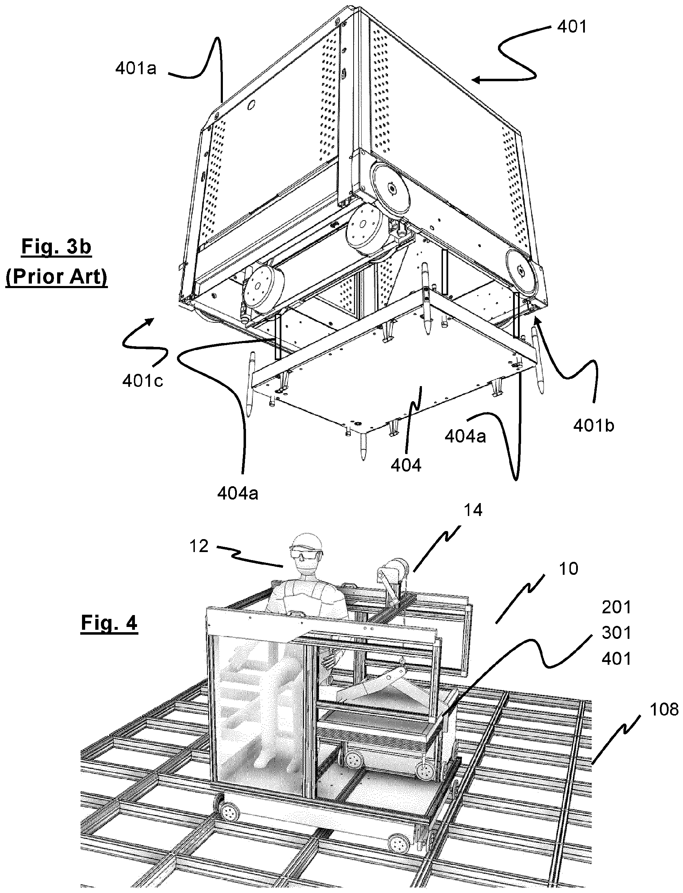

Each prior art container handling vehicle 201, 301, 401 also comprises a lifting device 304, 404 (visible in Figs. 3a-3b) having a lifting frame part 304a for vertical transportation of storage containers 106, e.g. raising a storage container 106 from, and lowering a storage container 106 into, a storage column 105. Lifting bands 404a are also shown in Fig. 3b. The lifting device 304, 404 comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference numbers 304 and 404. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n and Y*=1...*n* identifies the position of each storage column 105 in the horizontal plane. Consequently, as an example, and using the Cartesian coordinate system *X*, *Y,* Z indicated in Fig. 1, the storage container identified as 106' in Fig. 1 can be said to occupy storage position *X*=*18, Y*=*1, Z*=*6.* The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a storage grid 104, where the possible storage positions within this grid are referred to as storage cells within storage columns. Each storage column may be identified by a position in an X- and Y-direction, while each storage cell may be identified by a container number in the X-, Y- and Z-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1, the contents of which are incorporated herein by reference.

Fig. 3a shows an alternative configuration of a container handling vehicle 301 with a cantilever construction. Such a vehicle is described in detail in e.g. NO317366, the contents of which are also incorporated herein by reference.

The cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks. The rail system may also comprise a double track rail in one of the X or Y direction and a single track rail in the other of the X or Y direction. A double track rail may comprise two rail members, each with a track, which are fastened together.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 may be stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different heights, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201, 301, 401 is instructed, i.e. assigned with a task, to retrieve the target storage container 106 from its position and transport it to the drop-off port column 119. Such a vehicle task is always associated with a preferred vehicle route - most opportune path for the container handling vehicle 201, 301, 401 to travel between start and target grid positions. The accessing operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown in Fig. 2 but visible in Figs. 3a and 3b), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

The above-discussed rail system can be affected by various operational disturbances, for instance a broken vehicle charging station, a jammed storage container and minor issues, such as dust on the rail or broken/loose rail joints.

These disturbances are normally remedied by dispatching an appropriately equipped manned service vehicle on the rail system.

As is easily inferred, the rail system of the automated storage and retrieval system is a high-risk environment for the operator. One way to ensure service vehicle operator's safety during an operation, is to shut down the entire storage system, i.e. immediately bring to a halt all container handling vehicles operating on the rail system.

Such a measure could have a significant negative impact on the overall system economy, in particular for large systems featuring hundreds of container handling vehicle.

In view of all of the above, it is desirable to provide a solution that solves or at least mitigates one or more of the aforementioned issues belonging to the prior art.

### SUMMARY OF THE INVENTION

The present invention is set forth and characterized in the independent claims, while the dependent claims describe other characteristics of the invention.

First aspect of the invention relates to an automated storage and retrieval system in accordance with claim 1. More specifically, it relates to a method for improving safety of a manned service vehicle for an automatic grid-based storage and retrieval system, wherein the automatic grid-based storage and retrieval system comprises a storage grid and an overlying rail system, the rail system comprising a first set of parallel rails arranged in a first direction, and a second set of parallel rails arranged in a second direction which is perpendicular to the first direction, wherein the manned service vehicle and remotely operated vehicles having access to the storage grid operate on the rail system, said method comprising:
- establishing a dynamic restricted zone around the service vehicle, wherein said dynamic restricted zone is void of the remotely operated vehicles and moves with the service vehicle,
- moving the service vehicle from a start location towards a target location along a route,
- if a remotely operated vehicle on the rail system has been assigned a vehicle task with a vehicle route that includes moving towards the dynamic restricted zone, providing a new vehicle route.

By creating the dynamic restricted zone void of remotely operated vehicles and by, subsequently, preventing operating remotely operated vehicles from entering said zone it is established a no-traffic region around an intervening service vehicle carrying an operator. Accordingly, the risk of a remotely operated vehicle crashing into the service vehicle, and potentially injuring the operator, is eliminated. This advantage is obtained without completely shutting down the entire system and the system may continue to operate with reduced capacity. This is of particular interest for modern storage and retrieval systems with rail systems extending across large areas and featuring many container handling vehicles. Indeed, by virtue of the present invention, the capacity reduction in a system of this size is very small. Here, it is to be construed that the sequence of method steps of claim 1 may be effectuated in any given order.

A further advantage of the solution is that it may be implemented with existing components and communication protocols. Indeed, sensors and transceivers used in known remotely operated vehicles may be integrated in the service vehicle of the invention. Same is true for the protocols presently used for communication between the control system of the storage and retrieval system and the remotely operated vehicle - these are readily usable for communication between the control system of the storage and retrieval system and the service vehicle.

Another aspect of the invention relates to an automatic grid-based storage and retrieval system in accordance with claim 10, in which system the method may be implemented. For the sake of brevity, advantages discussed above in connection with the method of claim 1 may even be associated with the corresponding system and are not further discussed.

In one aspect, the invention is for use in the context of a grid rail system arranged across and forming part of the framework structure. More specifically, the upright members support the rail system. Here, a plurality of remotely operated vehicles travels on the rail system and raises goods holders from, and lowers goods holders into, the storage columns, and is also used to transport the goods holders above the storage columns. During this transport, the remotely operated vehicles move in a horizontal plane.

In this context, the present invention is for use with various types of remotely handling vehicles, for instance a cantilever-based container handling vehicle or a container handling vehicle having internally arranged cavity.

In one aspect, the invention is for use in the context of a SDG-based rail system. Here, SDG stands for Single/Double Grid. This design provides a single rail track along one axis and a double rail track along the other axis. Utilizing a single rail in one direction requires the meeting robots to have a cell between them. Rails of a SDG system have different widths. In another aspect, the invention is for use in the context of a DDG-based rail system. Here, DDG stands for Double/Double Grid. This design provides a double rail track in both directions allowing robots to pass each other in both directions. In a DDG-system, all column walls will have the same thicknesses.

For the purposes of this application, the term "container handling vehicle" used in "Background and Prior Art" section of the application and the term "remotely operated vehicle" used in the rest of the application text are synonymous and define an autonomous wheeled vehicle operating on a rail system arranged across the top of the framework structure being part of an automated storage and retrieval system.

Analogously, the terms "storage container" and "storage bin" used in "Background and Prior Art" section of the application and the term "goods holder" used in the rest of the application text are synonymous and define a receptacle for storing items. In a related context, the goods holder of the present application can be any one of a bin, a tote, a pallet, a tray or similar. Different types of goods holders may be used in the same automated storage and retrieval system.

The relative terms "upper", "lower", "below", "above", "higher" etc. shall be understood in their normal sense and as seen in a Cartesian coordinate system. When mentioned in relation to a rail system, "upper" or "above" shall be understood as a position closer to the rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle/ remotely operated vehicle having a centrally arranged cavity for carrying storage containers therein.
Fig. 3a is a perspective view of a prior art container handling vehicle/ remotely operated vehicle having a cantilever for carrying storage containers underneath.
Fig. 3b is a perspective view, seen from below, of a prior art container handling vehicle/remotely operated vehicle having an internally arranged cavity for carrying storage containers therein.
Fig. 4 is a perspective view of a service vehicle for use in an automated storage and retrieval system according to an embodiment of the present invention.
Fig. 5 is one embodiment of the present invention that schematically illustrates an implementation of a method for improving safety of a manned service vehicle for an automatic grid-based storage and retrieval system.
Fig. 6 is yet another embodiment of the present invention that schematically illustrates an implementation of a method for improving safety of a manned service vehicle for an automatic grid-based storage and retrieval system.
Fig. 7 is another embodiment of the present invention that schematically illustrates an implementation of a method for improving safety of a manned service vehicle for an automatic grid-based storage and retrieval system.

### DETAILED DESCRIPTION OF THE INVENTION

In overview a method is provided for improving safety of a manned service vehicle for example carrying an operator attending an operational disturbance on the rail system comprising establishing a dynamic restricted zone (30) around the service vehicle (10),and providing a new remotely operated vehicle route (40) to a remotely operated vehicle having a route (35) that includes moving towards the dynamic restricted zone (30). As a result the operator is protected in such a high-risk environment without the need to shut down the entire storage system, i.e. immediately bring to a halt all container handling vehicles operating on the rail system. Such a system additionally allows operation without additional dedicated components such as positional beacons but instead relying on existing routing control software with appropriate modification, and existing routing hardware and components.

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a rail system 108 in the X direction and Y direction.

The framework structure 100 further comprises storage compartments in the form of storage columns 105 provided between the members 102 where storage containers/goods holders 106 may be stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

As mentioned above, the system of Fig. 1 comprises a control system 500. The control system is in radio communication with a plurality of remotely operated vehicles (shown in detail in Figs. 2-3b). More precisely, each remotely operated vehicle has a vehicle controller (not shown) that sends/receives information to said control system 500. In an analogous way, the control system 500 is also in communication with a vehicle controller of a service vehicle (discussed in greater detail in connection with Fig. 4). At all times, the control system 500 has knowledge of all vehicles' current positions, routes of at least the container handling vehicles as well as permanent and temporary blockages present on the rail system 108. In order to optimize system operation, the control system 500 uses this information in its periodic recalculation of vehicles' routes. Occasionally, the control system 500 adjusts a specific vehicle's route. These route adjustments are then communicated to the vehicle controller of the concerned vehicle. Implementation of the control steps by the control system 500 may be performed by a computer processor or distributed computer processors of any appropriate type, implementing instructions in any appropriate form and stored in a computer readable medium of any appropriate type including software, firmware and hardware, as will be well known to the skilled reader.

Various aspects of the present invention will now be discussed in more detail with reference to Figs. 4-7.

Fig. 4 is a perspective view of a service vehicle 10 for use in an automated storage and retrieval system according to an embodiment of the present invention. The shown service vehicle 10 can transport an operator 12 around the rail system 108. The vehicle 10 has a winch mechanism 14 for removing broken remotely operated vehicles 201, 301, 401 from the rail system 108. However, other designs of the service vehicle are conceivable.

The service vehicle 10 may be fully controlled by the control system (500; shown in Fig. 1). The control system then keeps track of whereabouts of the service vehicle 10, for instance by using well-known method of radio positioning, or any other known method used by the system to keep track of the remotely operated vehicles, for instance a robot could count cells as it moves on the rail system and subsequently report cell count to the control system that determines position of said robot on the rail system. In another embodiment, the service vehicle 10 may be controlled by the on-board operator 12, but remain in contact with said control system, i.e. continuously providing its position to the control system. This set-up does not require further adaptations of the control system 500.

The service vehicle 10 could be provided with an emergency stop (not shown in Fig. 4). By activating the emergency stop, the on-board operator 12 may shut down the entire system of Fig. 1 if he/she deems it appropriate. This emergency stop can also be linked to any access point on the service vehicle itself, resulting in automatic activation of the emergency stop if the service vehicle undergoes an unexpected change, for instance a vehicle exit hatch gets opened.

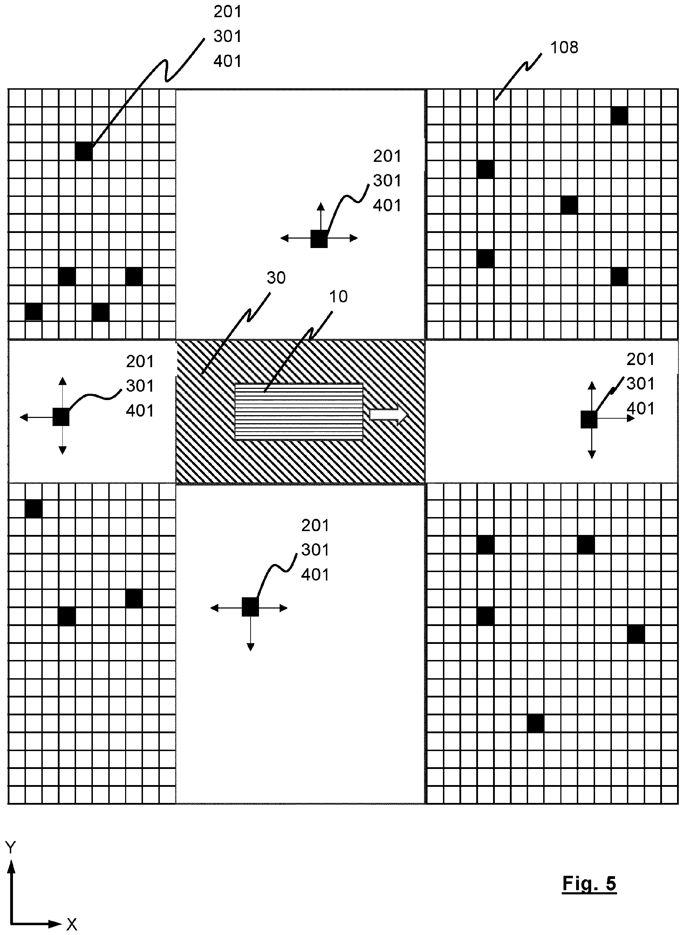

Fig. 5 is one embodiment of the present invention that schematically illustrates an implementation of a method for improving safety of a manned service vehicle 10 for an automatic grid-based storage and retrieval system shown in Fig. 1.

More specifically, Fig. 5 shows a section of an automatic grid-based storage and retrieval system 1, seen from above. As thoroughly discussed in connection with Fig. 1, the automatic grid-based storage and retrieval system 1 comprises a storage grid and an overlying rail system 108. As shown in Fig. 1, the rail system 108 comprises a first set of parallel rails arranged in a first direction X, and a second set of parallel rails arranged in a second direction Y which is perpendicular to the first direction X. The manned service vehicle (10; shown and discussed in connection with Fig. 4) and a plurality of remotely operated vehicles (201, 301, 401; shown and discussed in connection with Figs. 1-3b) having access to the storage grid, both operating on the rail system 108 are also shown.

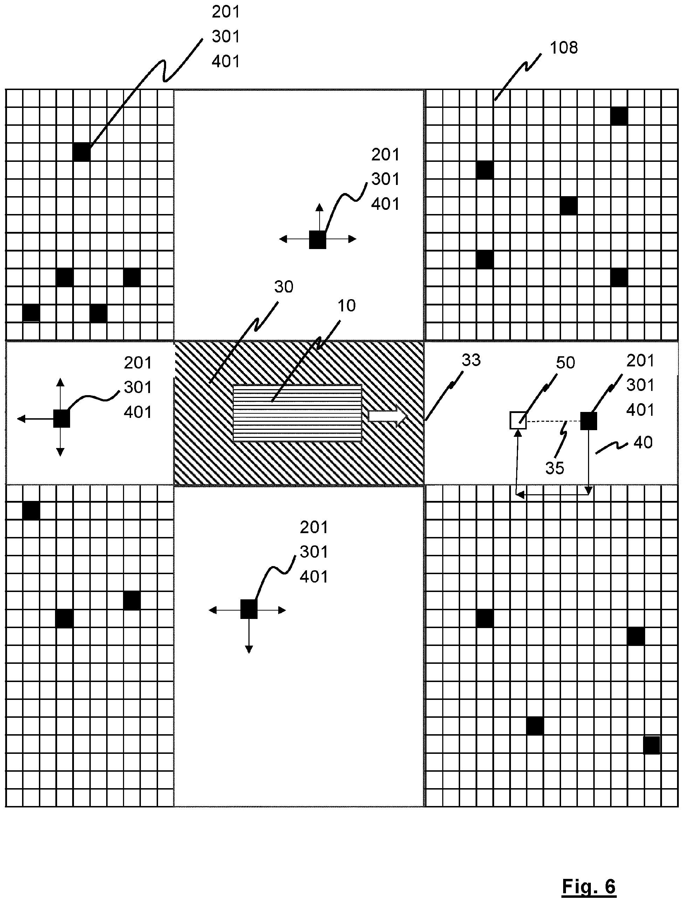

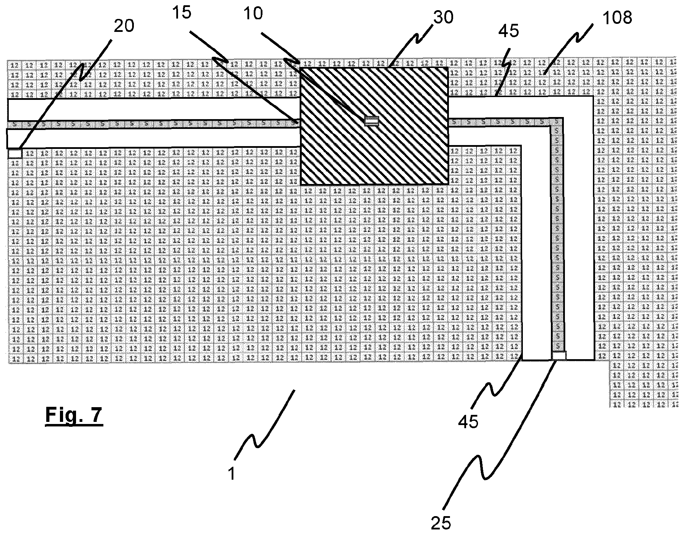

With reference to Fig. 5 and in a non-limiting embodiment, a control system (500; shown in Fig. 1) of the automatic grid-based storage and retrieval system 1 may establish a service vehicle route (15; shown in Fig. 7) along which the service vehicle moves. Typically, this route is subsequently communicated to the service vehicle 10 in a manner described above. The control system then establishes a dynamic restricted zone 30 around the service vehicle 10. The dynamic restricted zone 30 is void of the remotely operated vehicles 201, 301, 401 and moves with the service vehicle 10. Alternatively, the service vehicle route may be provided by the on-board operator of the service vehicle 10. The service vehicle 10 subsequently moves along said route while the control system 500 ensures that all remotely operated vehicles 201, 301, 401 stay clear of the dynamic restricted zone 30 in order to maintain it void. More specifically, if the remotely operated vehicle 201, 301, 401 on the rail system 108 has been assigned with a vehicle task with a vehicle route that includes moving towards the dynamic restricted zone 30, the control system 500 then provides a new vehicle route so that the remotely operated vehicle 201, 301, 401 may stay clear of the dynamic restricted zone 30. This is explained in greater detail in connection with Fig. 6. Still with reference to Fig. 5, this scenario is applicable for the four remotely operated vehicles 201, 301, 401 associated with line arrows, i.e. those remotely operated vehicles that face the dynamic restricted zone 30. Remaining remotely operated vehicles 201, 301, 401 may move freely on the rail system 108. It will be appreciated that the route calculation of the remotely operated vehicles 201, 301, 401 can include a time of flight or other temporal calculation taking into account the future respective positions of both the remotely operated vehicle 201, 301, 401 and the service vehicle if either or both are moving, when ensuring that the remotely operated vehicles 201, 301, 401 stay clear of the dynamic restricted zone 30.

Here, the dynamic restricted zone 30 is typically quadrangular in shape and adjustable in size. In particular, its size is adjustable while the service vehicle 10 moves from the start location to the target location. The size of the dynamic restricted zone 30 could depend on whether the service vehicle 10 is at a standstill or in motion. Hence, a vehicle 10 at a standstill would require a smaller zone 30 than a moving vehicle 10. In another embodiment, the size of the dynamic restricted zone 30 could depend on the speed of the moving service vehicle 10 - a faster moving vehicle 10 would normally require a larger zone 30.

Still with reference to the embodiment shown in Fig. 5, a block arrow denotes direction of movement of the service vehicle 10. Previously mentioned line arrows associated with certain individual remotely operated vehicles denote allowed directions of movement for these remotely operated vehicles, after they have been provided a new vehicle route. This will be explained in greater detail in connection with Fig. 6.

By creating the dynamic restricted zone 30 void of remotely operated vehicles 201, 301, 401 and by, subsequently, preventing operating remotely operated vehicles 201, 301, 401 from entering said zone 30 it is established a no-traffic region around an intervening service vehicle 10 carrying an operator. Accordingly, the risk of a remotely operated vehicle 201, 301, 401 crashing into the service vehicle 10, and potentially injuring the operator, is eliminated. This advantage is obtained without completely shutting down the entire system 1 so that the system 1 may continue to operate, albeit with reduced capacity. This is of particular interest for modern storage and retrieval systems with rail systems extending across a large area and featuring many container handling vehicles. Indeed, by virtue of the present invention, the capacity reduction in a system of this size could be very small.

A further general advantage of the solution is that it may be implemented with existing components and communication protocols. Indeed, sensors and transceivers used in known remotely operated vehicles 201, 301, 401 may be integrated in the service vehicle 10. Same is true for the protocols presently used for communication between the control system of the storage and retrieval system 1 and the remotely operated vehicles 201, 301, 401- these are readily usable for communication between the control system of the storage and retrieval system 1 and the service vehicle 10.

Route changes can take various forms. In one embodiment, the remotely operated vehicles 201, 301, 401 could be instructed to adjust speed and/or direction of movement. More specifically, speed of the remotely operated vehicles 201, 301, 401 could be adjusted to a higher value in order to reduce the risk of entering the dynamic restricted zone 30. This scenario could be applicable when the remotely operated vehicle 201, 301, 401 faces the dynamic restricted zone 30 and has been assigned with a vehicle task with a vehicle route that includes moving away from the dynamic restricted zone 30. In a related context, the remotely operated vehicle 201, 301, 401 may be instructed to reverse its direction of movement. This scenario could be applicable when the remotely operated vehicle 201, 301, 401 suddenly faces the dynamic, i.e. moving, restricted zone 30 and moves towards the service vehicle 10 positioned within the dynamic restricted zone 30. Moreover, the remotely operated vehicle 201, 301, 401 may be instructed to come to a halt.

Still with reference to the embodiment shown in Fig. 5, it could be envisagable to provide any of the above-mentioned instructions only to the remotely operated vehicles 201, 301, 401 positioned within a predetermined distance from the service vehicle 10. This entails that all remaining remotely operated vehicles 201, 301, 401, regardless of their respective position on the rail system 108, do not need to comply with restrictions to behave in a certain way. This embodiment is of particular interest in large systems featuring many remotely operated vehicles. For example this selection may be performed taking into account time of flight calculations to assess the likelihood of future positions overlapping.

Fig. 6 is yet another embodiment of the present invention that schematically illustrates an implementation of a method for improving safety of a manned service vehicle for an automatic grid-based storage and retrieval system.

More specifically, Fig. 6 shows the section of an automatic grid-based storage and retrieval system 1 shown in Fig. 5. The scenario shown in Fig. 6 could be applicable in a situation where a remotely operated vehicle 201, 301, 401 is assigned with a vehicle task by the control system (500; shown in Fig. 1) to access a storage cell 50 positioned between said remotely operated vehicle 201, 301, 401 and a boundary 33 of the dynamic restricted zone 30. Normally and for the sake of efficiency, this vehicle task would be associated with a vehicle route (35; indicated by dashed line in Fig. 6) involving a rectilinear or direct movement of the remotely operated vehicle 201, 301, 401 towards the storage cell 50. However, this vehicle task must be completed without violating the overriding operation criterion - the vehicle route must not include moving of the remotely operated vehicle 201, 301, 401 towards the dynamic restricted zone 30, ultimately ensuring that the remotely operated vehicle 201, 301, 401 stays clear of said dynamic restricted zone 30. In response a new vehicle route 40 needs to be provided by the control system 500. More specifically and as seen in Fig. 6, the new vehicle route entails that the remotely operated vehicle 201, 301, 401 first is instructed to move in parallel with said boundary 33 until the remotely operated vehicle 201, 301, 401 no longer faces said dynamic restricted zone 30. The remotely operated vehicle 201, 301, 401 is subsequently instructed to move perpendicularly to said boundary 33 until said remotely operated vehicle 201, 301, 401 is aligned with the storage cell 50. Finally, the remotely operated vehicle 201, 301, 401 is instructed to move in parallel with said boundary 33 until reaching the storage cell 50. Movement of the remotely operated vehicle 201, 301, 401 along the new route 40 is visualized by means of line arrows. In this way, the remotely operated vehicle 201, 301, 401 may access the particular storage cell 50 without violating the system policy, i.e. the vehicle 201, 301, 401 completes the task of accessing the particular storage cell but doesn't move towards the service vehicle 10 and the dynamic restricted zone 30 surrounding it.

Fig. 7 is another embodiment of the present invention that schematically illustrates an implementation of a method for improving safety of a manned service vehicle 10 for an automatic grid-based storage and retrieval system 1.

More specifically, Fig. 7 shows an exemplary automatic grid-based storage and retrieval system 1, seen from above. As thoroughly discussed in connection with Fig. 5, the automatic grid-based storage and retrieval system 1 comprises a storage grid and an overlying rail system 108. A plurality of remotely operated vehicles (not shown in Fig. 7) operate on the rail system. The service vehicle 10 has been dispatched to remedy a rail system disturbance. Accordingly, a route 15 for the service vehicle 10 disposed in a start location 20 to reach the target location 25 has been established (by the control system or by the operator). As seen, the service vehicle 10, moving along said route 15, is approximately halfway between the start 20 and the target 25 locations. The dynamic restricted zone 30, void of the remotely operated vehicles and moving with the service vehicle, is also shown.

As shown in Fig. 7, a corridor 45 extending on both sides of the service vehicle route 15 is established by the control system. The width of the dynamic restricted zone 30 should be equal to or exceed the width of the corridor 45. Purpose of the corridor 45 is to optimize operation of the service vehicle 10 without disabling the important process of digging for goods holder. Thus, if a goods holder digging process is in progress within said corridor 45, then the dug-out goods holders are to be (temporarily) deposed outside said corridor 45.

Still with reference to Fig. 7, a returning service vehicle 10 normally travels along the same route 15, but in the opposite direction. This contributes to keeping the number of vehicle route adjustments of the remotely operated vehicles at a minimum and improves overall system efficiency.

Also disclosed herein are a number of examples according to the following numbered clauses.

Clause 1. A method for improving safety of a manned vehicle service (10) for an automatic grid-based storage and retrieval system (1), wherein the automatic grid-based storage and retrieval system (1) comprises a storage grid (104) and an overlying rail system (108), the rail system (108) comprising a first set of parallel rails (110) arranged in a first direction (X), and a second set of parallel rails (111) arranged in a second direction (Y) which is perpendicular to the first direction (X), wherein the manned service vehicle (10) and remotely operated vehicles (201, 301, 401) having access to the storage grid (104) operate on the rail system (108), said method comprising:
- establishing a dynamic restricted zone (30) around the service vehicle (10), wherein said dynamic restricted zone (30) is void of the remotely operated vehicles (201, 301, 401) and moves with the service vehicle (10),
- moving the service vehicle (10) from a start location (20) towards a target location (25) along a route (15),
- if a remotely operated vehicle (201, 301, 401) on the rail system (108) has been assigned with a vehicle task with a vehicle route (35) that includes moving towards the dynamic restricted zone (30), providing a new vehicle route (40).

Clause 2. A method of Clause 1, wherein the step of providing a new vehicle route (40) comprises:
- instructing the remotely operated vehicle (201, 301, 401) to adjust speed and/or direction of movement.

Clause 3. A method of Clause 2, wherein the step of instructing the remotely operated vehicle (201, 301, 401) to adjust speed and/or direction of movement comprises adjusting the speed of the remotely operated vehicle (201, 301, 401) to a preset value.

Clause 4. A method of any of Clauses 2-3, wherein the step of instructing the remotely operated vehicle (201, 301, 401) to adjust speed and/or direction of movement comprises reversing direction of movement of the remotely operated vehicle (201, 301, 401).

Clause 5. A method of any of the preceding Clauses, wherein the new vehicle route (40) is provided to the remotely operated vehicles (201, 301, 401) positioned within a predetermined distance from the service vehicle (10).

Clause 6. A method of any of the preceding Clauses, wherein the method comprises:
- establishing a corridor (45) extending on both sides of the service vehicle route (15), wherein the width of the dynamic restricted zone (30) is equal to or exceeds the width of the corridor (45).

Clause 7. A method of Clause 6, wherein the method comprises:
- if a goods holder digging process is in progress within the corridor (45), deposing dug-out goods holders outside the corridor (45).

Clause 8. A method of any of the preceding Clauses, wherein the dynamic restricted zone (30) is quadrangular in shape and adjustable in size.

Clause 9. A method of any of the preceding Clauses, wherein the method comprises:
- if a remotely operated vehicle (201, 301, 401) on the rail system (108) has been assigned a vehicle task to access a storage cell (50) positioned between said remotely operated vehicle (201, 301, 401) and a boundary (33) of the dynamic restricted zone (30) said vehicle (201, 301, 401) faces, providing the new remotely operated vehicle route (40) comprises:
- instructing the remotely operated vehicle (201, 301, 401) to move in parallel with said boundary (33) until the remotely operated vehicle (201, 301, 401) no longer faces said dynamic restricted zone (30),
- instructing the remotely operated vehicle (201, 301, 401) to move perpendicularly to said boundary (33) until said remotely operated vehicle (201, 301, 401) is aligned with the storage cell (50),
- instructing the remotely operated vehicle (201, 301, 401) to move in parallel with said boundary (33) until reaching the storage cell (50).

Clause 10. An automatic grid-based storage and retrieval system (1) comprising a storage grid (104) and an overlying rail system (108), the rail system (108) comprising a first set of parallel rails (110) arranged in a first direction (X), and a second set of parallel rails (111) arranged in a second direction (Y) which is perpendicular to the first direction (X), wherein the system (1) comprises a manned service vehicle (10) operating on the rail system (108) so as to move from a start location (20) towards a target location (25) along a service vehicle route (15), wherein the system (1) comprises remotely operated vehicles (201, 301, 401) operating on the rail system (108) and having access to the storage grid (104), said system (1) being configured to:
- establish a dynamic restricted zone (30) around the service vehicle (10), wherein said dynamic restricted zone (30) is void of the remotely operated vehicles (201, 301, 401) and moves with the service vehicle (10), and
- if a remotely operated vehicle (201, 301, 401) on the rail system (108) has been assigned with a vehicle task with a vehicle route (35) that includes moving towards the dynamic restricted zone (30), providing a new vehicle route (40).

Clause 11. An automatic grid-based storage and retrieval system (1) of Clause 10, said system (1) being configured to instruct the remotely operated vehicle (201, 301, 401) to adjust speed and/or direction of movement.

Clause 12. An automatic grid-based storage and retrieval system (1) of Clause 11, said system (1) being configured to adjust speed of the remotely operated vehicle (201, 301, 401) to a preset value.

Clause 13. An automatic grid-based storage and retrieval system (1) of any of Clauses 11-12, said system (1) being configured to reverse direction of movement of the remotely operated vehicle (201, 301, 401).

Clause 14. An automatic grid-based storage and retrieval system (1) of any of Clauses 10-13, said system (1) being configured to provide the new remotely operated vehicle route (40) to the remotely operated vehicles (201, 301, 401) positioned within a predetermined distance from the service vehicle (10).

Clause 15. An automatic grid-based storage and retrieval system (1) of any of Clauses 10-14, said system (1) being configured to establish a corridor (45) extending on both sides of the service vehicle route (15), wherein the width of the dynamic restricted zone (30) is equal to or exceeds the width of the corridor (45).

Clause 16. An automatic grid-based storage and retrieval system (1) of Clause 15, said system (1) being configured to, if a goods holder digging process is in progress within the corridor (45), depose dug-out goods holders outside the corridor (45).

Clause 17. An automatic grid-based storage and retrieval system (1) of any of Clauses 10-16, wherein the dynamic restricted zone (30) is quadrangular in shape and adjustable in size.

Clause 18. An automatic grid-based storage and retrieval system (1) of any of Clauses 10-17, wherein, if a remotely operated vehicle (201, 301, 401) has been assigned by the system (1) with a vehicle task to access a storage cell (50) positioned between said remotely operated vehicle (201, 301, 401) and a boundary (33) of the dynamic restricted zone (30) said vehicle (201, 301, 401) faces, said system (1) is configured to provide the new remotely operated vehicle route (40) by:
- instructing the remotely operated vehicle (201, 301, 401) to move in parallel with said boundary (33) until the remotely operated vehicle (201, 301, 401) no longer faces said dynamic restricted zone (30),
   instructing the remotely operated vehicle (201, 301, 401) to move perpendicularly to said boundary (33) until said remotely operated vehicle (201, 301, 401) is aligned with the storage cell (50),
- instructing the remotely operated vehicle (201, 301, 401) to move in parallel with said boundary (33) until reaching the storage cell (50).

In the preceding description, various aspects of the method for improving safety of a manned service vehicle operating on an automatic grid-based storage and retrieval system have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

### List of reference numbers

- 1: Storage and retrieval system
- 10: Service vehicle
- 12: Operator
- 14: Winch mechanism
- 15: Service vehicle route
- 20: Start location
- 25: Target location
- 30: Dynamic restricted zone
- 33: Boundary of the dynamic restricted zone
- 35: Remotely operated vehicle route
- 40: New remotely operated vehicle route
- 45: Corridor
- 50: Storage cell
- 100: Framework structure
- 102: Upright members of framework structure
- 104: Storage grid
- 105: Storage column
- 106: Storage container/goods holder
- 106': Particular position of storage container
- 107: Stack of storage containers
- 108: Rail system
- 110: Parallel rails in first direction (X)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (X)
- 201c: Drive means / wheel arrangement, second direction (*Y*)
- 301: Cantilever-based container handling vehicle
- 301a: Vehicle body of the container handling vehicle 301
- 301b: Drive means in first direction (X)
- 301c: Drive means in second direction (*Y*)
- 401: Container handling vehicle belonging to prior art
- 401a: Vehicle body of the container handling vehicle 401
- 401b: Drive means in first direction (X)
- X: First direction
- *Y*: Second direction
- *Z*: Third direction
- 500: Control system

## Claims

1. A method for improving safety of a manned service vehicle (10) on a rail system having remotely operated vehicles (201, 301, 401) operating thereon, said method comprising:
establishing a dynamic restricted zone (30) around the service vehicle (10),
moving the service vehicle (10) from a start location (20) towards a target location (25) along a service vehicle route (15),
if a remotely operated vehicle (201, 301, 401) on the rail system (108) has been assigned with a vehicle task with a remotely operated vehicle route (35) that includes moving towards the dynamic restricted zone (30), providing a new remotely operated vehicle route (40).

2. The method of claim 1 for an automatic grid-based storage and retrieval system (1), wherein the automatic grid-based storage and retrieval system (1) comprises a storage grid (104) and the rail system comprises an overlying rail system (108) comprising a first set of parallel rails (110) arranged in a first direction (X), and a second set of parallel rails (111) arranged in a second direction (Y) which is perpendicular to the first direction (X), said method further comprising:
maintaining said dynamic restricted zone (30) void of the remotely operated vehicles (201, 301, 401) and/or moving said dynamic restricted zone with the service vehicle (10).

3. The method of claim 1, wherein the step of providing a new vehicle route (40) comprises:
instructing the remotely operated vehicle (201, 301, 401) to adjust speed and/or direction of movement, and preferably wherein the step of instructing the remotely operated vehicle (201, 301, 401) to adjust speed and/or direction of movement comprises adjusting the speed of the remotely operated vehicle (201, 301, 401) to a preset value.

4. The method of claim 3, wherein the step of instructing the remotely operated vehicle (201, 301, 401) to adjust speed and/or direction of movement comprises reversing direction of movement of the remotely operated vehicle (201, 301, 401).

5. The method of any of the preceding claims, wherein the new vehicle route (40) is provided to the remotely operated vehicles (201, 301, 401) positioned within a predetermined distance from the service vehicle (10).

6. The method of any of the preceding claims, wherein the method comprises:
establishing a corridor (45) extending on both sides of the service vehicle route (15), wherein the width of the dynamic restricted zone (30) is equal to or exceeds the width of the corridor (45) and optionally wherein the method comprises:
if a goods holder digging process is in progress within the corridor (45), deposing dug-out goods holders outside the corridor (45).

7. The method of any of the preceding claims, wherein the dynamic restricted zone (30) is quadrangular in shape and adjustable in size.

8. The method of any of the preceding claims, wherein the method comprises:
if a remotely operated vehicle (201, 301, 401) on the rail system (108) has been assigned a vehicle task to access a storage cell (50) positioned between said remotely operated vehicle (201, 301, 401) and a boundary (33) of the dynamic restricted zone (30) said vehicle (201, 301, 401) faces, providing the new remotely operated vehicle route (40) comprises:
instructing the remotely operated vehicle (201, 301, 401) to move in parallel with said boundary (33) until the remotely operated vehicle (201, 301, 401) no longer faces said dynamic restricted zone (30),
instructing the remotely operated vehicle (201, 301, 401) to move perpendicularly to said boundary (33) until said remotely operated vehicle (201, 301, 401) is aligned with the storage cell (50),
instructing the remotely operated vehicle (201, 301, 401) to move in parallel with said boundary (33) until reaching the storage cell (50).

9. A computer readable medium storing instructions for implementing the method of any of claims 1 to 8.

10. An automatic grid-based storage and retrieval system (1) comprising a rail system having a manned service vehicle (10) and remotely operated vehicles (201, 301, 401) operating thereon, and a controller configured to implement instructions for implementing the method of any of claims 1 to 8.

11. The automatic grid-based storage and retrieval system (1) of claim 10 comprising a storage grid (104) and the rail system comprising an overlying rail system (108) comprising a first set of parallel rails (110) arranged in a first direction (X), and a second set of parallel rails (111) arranged in a second direction (Y) which is perpendicular to the first direction (X), wherein the manned service vehicle (10) is operable (108) so as to move from a start location (20) towards a target location (25) along a service vehicle route (15), and wherein the remotely operated vehicles (201, 301, 401) have access to the storage grid (104).
